# EUROPEAN PATENT SPECIFICATION

(11) **EP 3 632 670 B1**
(45) Date of publication and mention of the grant of the patent: **08.12.2021**
(21) Application number: 19201516.2
(22) Date of filing: 04.10.2019
(51) Int. Cl.: B31B 70/02, B31B 70/04, B31B 70/84, B31B 150/00, B31B 160/10

(54) **JOINT APPARATUS AND SPOUT SEALING MACHINE**
VERBINDUNGSVORRICHTUNG UND AUSGUSSVERSCHWEISSMASCHINE
APPAREIL DE JOINT ET MACHINE DE SCELLEMENT D'UN BEC VERSEUR

(30) Priority: 05.10.2018 JP 2018190169
(43) Date of publication of application: 08.04.2020
(73) Proprietor: Toyo Jidoki Co., Ltd., Tokyo 108-0014 (JP)
(72) Inventor: MIZOTE, Kiyokazu, Iwakuni-shi,, Yamaguchi 740-0045 (JP)
(74) Representative: Grünecker Patent- und Rechtsanwälte PartG mbB

(56) References cited:
- US-A1- 2001 052 215

## Description

### Field of the Invention

The present invention relates to a joint apparatus and a spout sealing machine.

### Background Art

A pouch with spout for enclosing a liquid or jelly beverage having fluidity or a detergent has been widely used conventionally. A consumer can discharge contents in the pouch through a spout part to the outside of the pouch. An apparatus related to such a pouch with spout is a sealing apparatus that attaches an empty pouch to a spout, and seals a pouch mouth of the pouch.

The closest prior art represented by US 2001/052215 A1 shows a joint apparatus in accordance with the preamble of claim 1.

Furthermore, in the sealing apparatus disclosed in JP 4150610 B2, a pouch mouth of a pouch is firstly opened by a predetermined size, the pouch is then elevated under this state to a predetermined height, and a lower cylindrical portion of a spout is inserted into the pouch. Thereafter, the pouch mouth is closed so that the pouch mouth covers the lower cylindrical portion of the spout. Then, the pouch is pressed from both sides thereof onto the cylindrical portion of the spout by temporal sealing heating plates. By melting an inside layer of the pouch, temporal sealing is performed.

When the lower cylindrical portion of the spout is inserted into the pouch, an end of the pouch mouth of the pouch is brought into contact with a flange part provided on the spout, so that the pouch is positioned with respect to the spout. The inventors' intensive studies on the positioning of the pouch with respect to the spout show the following problem.

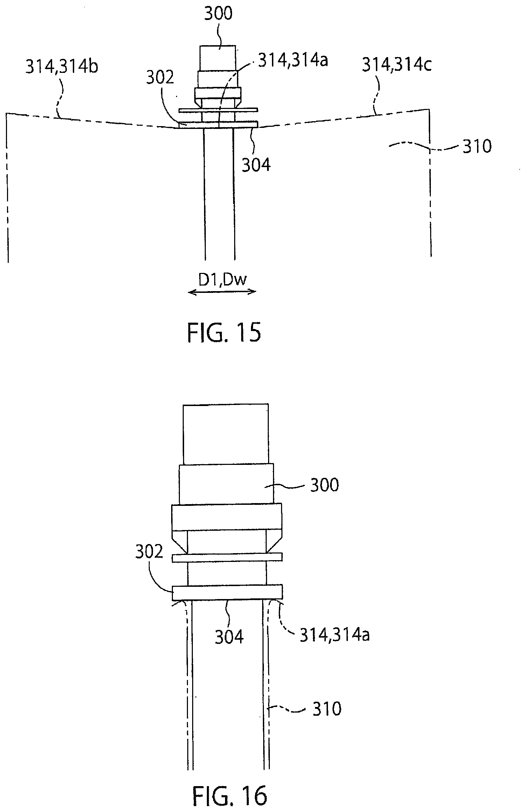

For example, a spout 300 is held at a predetermined position, and a pouch body 310 with a pouch mouth 312 facing upward is elevated toward the spout 300. When an end 314 of the pouch mouth 312 is brought into contact with a flange part 302 provided on the spout 300, a vertical position of a central part 314a of a width direction Dw in the end 314 of the pouch mouth 312 is restricted by the flange part 302. On the other hand, a vertical position of a part of the end 314 of the pouch mouth 312, other than the central part 314a, is not restricted by the flange part 302 of the spout 300. Thus, as shown in Fig. 15, side parts 314b, 314c of the width direction Dw in the end 314 of the pouch mouth 312 are positioned higher than a lower end 304 of the flange part 302. At this time, an upwardly pulling force acts on the central part 314a of the pouch mouth 312 by means of the side parts 314b, 314c of the pouch mouth 312. Thus, as shown in Fig. 16, in the central part 314a of the pouch mouth 312, the end 314 of the pouch mouth 312 may be separated from the spout 300.

In order to solve this problem, the use of cameras and/or sensors for detecting positions of a pouch and a spout so as to control the position of the pouch could be considered. However, even if the elevation of the pouch or the spout is stopped based on a signal when the pouch or the spout is located at a correct position, it is difficult to stabilize the positions of the pouch and the spout because of time loss in a control unit that receives the signal. Namely, because of a time lug generated by the time when the elevation of the pouch or the spout is stopped, the pouch or the spout is displaced. In addition, when the positioning of the pouch and the spout is processed at a high speed, it is further difficult to stabilize the positioning.

### Summary of the Invention

The present invention has been made in view of the above circumstances. The object of the present invention is to provide a joint apparatus and a spout sealing machine that are capable of stably aligning a spout and a pouch body by means of a simple structure.

The joint apparatus according to the present invention is a joint apparatus that joins a pouch body to a spout, comprising:
a spout holding unit that holds the spout;
a positioning mechanism that positions the pouch body with respect to the spout; and
a joint mechanism that joins a pouch mouth of the pouch body to the spout;
wherein the positioning mechanism has a pouch-body moving unit that moves the pouch body toward the spout, a contact member having a contact part that comes into contact with an end of the pouch mouth, and an absorption mechanism that absorbs a part of a force acting on the pouch body when the end of the pouch mouth comes into contact with the spout or the contact member, and wherein the contact part is movable between a contact position at which the contact part is in contact with the end of the pouch mouth, and a retracted position retracted from the contact position.

In the joint apparatus according to the present invention, the pouch-body moving unit may position the pouch body with respect to the spout, while supporting a bottom of the pouch body.

In the joint apparatus according to the present invention, the contact member may have at least two contact parts that are positioned on one side and on the other side with respect to the spout holding unit.

In the joint apparatus according to the present invention, the positioning mechanism may further have a guide unit that guides a side edge part of the pouch body, and the guide unit may be movable between a guide position at which the guide unit is in contact with the side edge part and guides the side edge part, and a retracted position retracted from the guide position.

A spout sealing machine according to the present invention comprises the aforementioned joint apparatus and a sealing apparatus that seals the pouch mouth, wherein the joint mechanism is configured to temporally seal the pouch mouth of the pouch body to the spout.

According to the present invention, it is possible to provide a joint apparatus and a spout sealing machine that are capable of stably aligning a spout and a pouch body by means of a simple structure.

### Brief Description of the Drawings

Fig. 1 is a view for describing an embodiment of the present invention, which is a perspective view showing a whole structure of a spout sealing machine in which a joint apparatus is incorporated.
Fig. 2 is a view of a pouch-body holding mechanism of the spout sealing machine, seen along a transport direction of a pouch body.
Fig. 3 is a view of the pouch-body holding mechanism, seen from above.
Fig. 4 is a view of a positioning mechanism of the joint apparatus, seen along the transport direction of a pouch body.
Fig. 5 is a view of the positioning mechanism, seen along a direction perpendicular to a sheet surface of a pouch body.
Fig. 6 is a view of the positioning mechanism, seen from above.
Fig. 7 is a view of a part of the positioning mechanism, seen along the direction perpendicular to a sheet surface of a pouch body, for describing a contact member of the positioning mechanism.
Fig. 8 is a view of the positioning mechanism of Fig. 7, seen from above.
Fig. 9 is a view for describing an operation of the joint apparatus.
Fig. 10 is a view for describing the operation of the joint apparatus.
Fig. 11 is a view for describing the operation of the joint apparatus.
Fig. 12 is a view for describing the operation of the joint apparatus.
Fig. 13 is a view for describing an effect of the joint apparatus in this embodiment, which shows a spout and a pouch body, seen from the direction perpendicular to a sheet surface of the pouch body.
Fig. 14 is a view for describing an effect of the joint apparatus in this embodiment, which shows a spout and a pouch body, seen from the direction perpendicular to a sheet surface of the pouch body.
Fig. 15 is a view for describing an object of the present invention, which shows a spout and a pouch body, seen from the direction perpendicular to a sheet surface of the pouch body.
Fig. 16 is a view for describing an object of the present invention, which shows a spout and a pouch body, seen from the direction perpendicular to a sheet surface of the pouch body.

### Detailed Description of the Invention

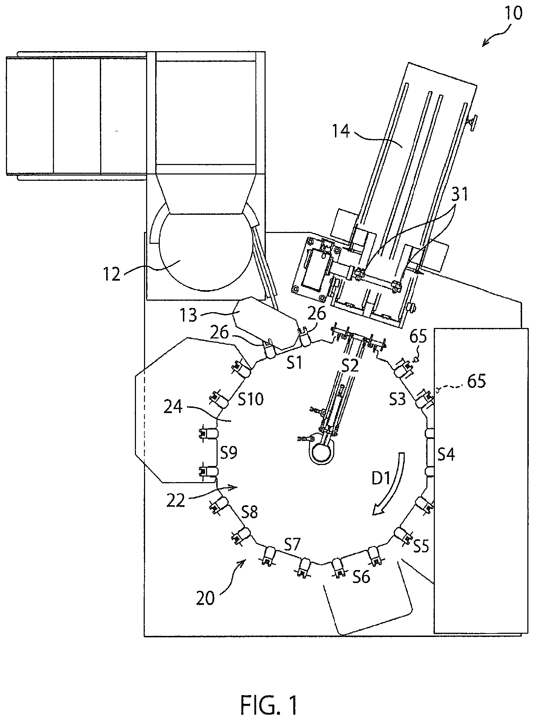

Herebelow, an embodiment of the present invention is described with reference to the drawings. Figs. 1 to 14 are views for describing the embodiment of the present invention. Fig. 1 is a perspective view showing a whole structure of a spout sealing machine 10 in which a joint apparatus 40 is incorporated.

The spout sealing machine 10 comprises a spout supply apparatus 12, a pouch supply apparatus 14 and a pouch processing apparatus 20.

The spout supply apparatus 12 is an apparatus that supplies a spout 200 to a first station (spout supply unit) S1 of the pouch processing apparatus 20. In an example shown in Fig. 1, the spout supply apparatus 12 has a rail for holding and conveying a spout 200, and conveys a spout 200 to a distal end of the rail by using vibrations applied to the rail. The spout 200 positioned at the distal end of the rail is removed from the rail by a delivery mechanism 13, and is delivered to a below-described spout holding unit 26 positioned at the first station S1 of the pouch processing apparatus 20.

The pouch supply apparatus 14 is an apparatus that supplies a pouch body 210 to a second station (empty-pouch supply unit) S2 of the pouch processing apparatus 20. A plurality of pouch bodies 210 are stored in a stacked state in the pouch supply apparatus 14. Each pouch body 210 is a empty, and a pouch mouth 212 is closed, with opposed sidewalls (sheet members) forming the pouch mouth 212 being in contact with each other. The pouch bodies 210 stored in the pouch supply apparatus 14 are held one by one by a pouch taking-out unit 31 formed of a sucking disc, for example, and are delivered from the pouch taking-out unit 31 to the spout holding unit 26 positioned at the second station S2 of the pouch processing apparatus 20.

The pouch processing apparatus 20 in this embodiment comprises the joint apparatus 40. The joint apparatus 40 comprises the spout holding unit 26 that holds a spout 200, a positioning mechanism 70 that positions a pouch body 210 with respect to a spout 200, and a joint mechanism 65 that joins a pouch mouth 212 of a pouch body 210 to a spout 200. Herebelow, the pouch processing apparatus 20 is described in detail.

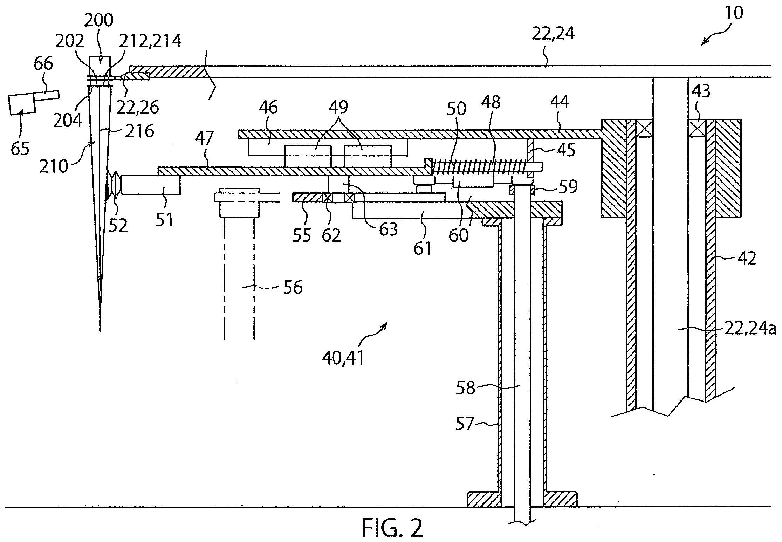

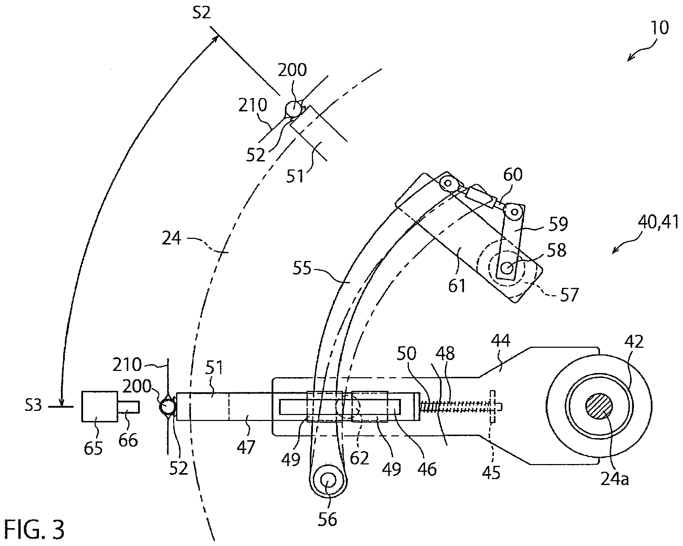

The pouch processing apparatus 20 shown in Fig. 1 comprises: a transport mechanism 22 that transports a spout 200 and a pouch body 210 in a standing posture, along a predetermined track; and a plurality of processing units (in the example shown in Fig. 1, the first station S1 to a tenth station S10) that process a spout 200 and a pouch body 210 transported by the transport mechanism 22. The transport mechanism 22 comprises: a transport table 24 that is intermittently rotated about an axis; and a plurality of spout holding units 26 each for holding a spout 200, the spout holding units 26 being disposed equidistantly on an outer circumferential part of the transport table 24. In Fig. 1, the transport table 24 is illustrated to be transparent in order to facilitate understanding of other structures. As shown in Figs. 2 and 3, the transport table 24 is disposed on a rotation shaft 24a. A lower part of the rotation shaft 24a is connected to a drive source, not shown. By rotating the rotation shaft 24a that receives a drive force from the drive source, the transport table 24 is intermittently rotated. Each spout holding unit 26 has a two-pronged distal end which is radially outside of the transport table 24. The spout holding unit 26 is configured to support a spout 200 with the two-pronged portion being interposed between upper and lower flange parts 202 of a spout 200. Thus, each spout 200 and each pouch body 210 are held and transported in a hanging state by the spout holding unit 26. Each spout holding unit 26 is intermittently moved along a transport direction (rotation direction) D1 together with the transport table 24, and is intermittently stopped at the first station S1 to the tenth station S10. Namely, a pouch body 210 is repeatedly moved and stopped along the predetermined track so as to be transported. In the illustrated example, in one station, two spouts 200 are simultaneously processed. Namely, two spout holding units 26 are disposed in each station. Thus, the spout sealing machine 10 of Fig. 1 is provided with twenty spout holding units 26 in total.

In the first station (spout supply unit) S1, a spout 200 is delivered by the delivery mechanism 13 to the spout holding unit 26 (spout supply step). In the second station (empty-pouch supply unit) S2, a pouch 210 is supplied by the pouch taking-out unit 31 from the pouch supply apparatus 14, and a part of the spout 200 is covered with the pouch body 210 by a pouch covering mechanism (empty-pouch supply step). In a third station (temporal joint unit) S3, a pouch mouth 212 of the pouch body 210 is temporally joined to the spout 200 by the joint apparatus 40 (temporal joint step). In a fourth station (first sealing unit) S4 and a fifth station (second sealing unit) S5, the pouch mouth 212 of the pouch 210 is sealed by a first sealing apparatus 35 and a second sealing apparatus 37 (first sealing step and second sealing step). In a sixth station (cooling unit) S6, the heat-sealed pouch mouth 210 of the pouch 200 is cooled by a cooling apparatus (sealed-portion cooling step). In a seventh station (printing unit) S7, a production date, an expiration date and so on are printed on a surface of the pouch 200 by a printing apparatus, not shown (printing step). In an eighth station (inspection unit) S8, an attachment state between the spout 200 and the pouch body 210 is inspected (inspection step). In the inspection step, acceptance or unacceptable of the attachment state is judged based on an image taken by a camera, for example. In a ninth station (product discharge unit) S9, a product whose attachment state is judged as acceptable is discharged by a not-shown product discharge conveyor, for example. In a tenth station (reject-product discharge unit) S10, a product whose attachment state is judged as unacceptable is discharged.

Next, the joint apparatus 40 to be incorporated in the spout sealing machine 10 is described with reference to Figs. 2 to 12. In this embodiment, an example in which the joint apparatus 40 performs the temporal joint step in the third station S3 is described. However, the use of the joint apparatus 40 is not limited thereto. For example, when the temporal joint step is omitted in the spout sealing machine 10, the joint apparatus 40 may perform the sealing step (first sealing step). Namely, with the use of the joint apparatus 40, joining of the pouch body 210 to the spout 200 and sealing of the pouch mouth 212 of the pouch body 210 may be simultaneously performed.

The joint apparatus 40 in this embodiment comprises the spout holding unit 26 that is disposed on the transport table 24 and configured to hold a spout 200, a pouch-body holding mechanism 41 that holds a pouch body 210 and moves the pouch body 210 from the second station S2 to the third station S3 following the rotation of the transport table 24, i.e., the movement of the spout 200, the positioning mechanism 70 that positions the pouch body 210 with respect to the spout 200, and the joint mechanism 65 that temporally joins a pouch mouth 212 of the pouch body 210 to the spout 200. In the second station S2, the joint apparatus 40 receives a pouch body 210 from the pouch supply apparatus 14, and covers a part of a spout 200 with a pouch mouth 212 of the pouch body 210 by the pouch covering mechanism. Then, the joint apparatus 40 transports the pouch body 210 by the pouch-body holding mechanism 41 from the second station S2 to the third station S3. In the third station, the joint apparatus 40 positions the pouch body 210 with respect to the spout 200 by the positioning mechanism 70, and temporally joins the pouch body 210 to the spout 200 under this state by the joint mechanism 65.

The pouch-body holding mechanism 41 is described with reference to Figs. 2 and 3. Fig. 2 is a view of the pouch-body holding mechanism 41, seen along the transport direction D1 of a pouch body 210. Fig. 3 is a view of the pouch-body holding mechanism 41, seen from above.

Herebelow, members constituting the pouch-body holding mechanism 41 are described, with reference numerals 42 to 62 being given to these members. In the rotation shaft 24a disposed on the transport table 24, a hollow shaft 42 is disposed coaxially to the rotation shaft 24a through a bearing 43. A lower part of the hollow shaft 42 is connected to a drive source, not shown. The hollow shaft 42 receives a drive force from the drive source so as to be reciprocally rotated within a predetermined angular range. A first swinging lever 44 that extends in the radial direction of the transport table 24 is disposed on the hollow shaft 42, so that the hollow shaft 42 and the first swinging lever 44 are integrally rotated. A slide-shaft support block 45 that slidably guides a below-described slide shaft 48 is disposed on a lower surface of the first swinging lever 44 at a position close to the rotation center. In addition, a slide rail 46 that slidably supports a below-described slide member 49 is disposed on a distal end side of the first swinging lever 44.

The reference numeral 47 depicts a movement plate. The slide shaft 48 is disposed on a rear end side of the movement plate 47. In addition, on an upper surface of the movement plate 47, the slide member 49 that is fitted in the aforementioned slide rail 46 so as to be slidable along the slide rail 46 is disposed. The slide rail 46 and the slide member 49 have a groove and a projection fitted with each other, whereby the slide member 49 is slidable and is supported by the slide rail 46. Thus, the movement plate 47 and the slide shaft 48 can be integrally slid with respect to the slide rail 46. A compression spring 50 is disposed between the movement plate 47 and the slide-shaft support block 45 so as to urge the movement plate 47 radially outward of the transport table 24.

A support block 51 is disposed on a lower surface of a distal end of the movement plate 47 such that the support block 51 is movably adjustable with respect to the movement plate 47. A sucking disc 52 is disposed on a distal end of the support block 51. The sucking disc 52 is used for sucking a pouch body 210 so as to hold the pouch body 210 in the temporal sealing step.

The reference numeral 55 depicts a movement cam. One end of the movement cam 55 is carried by a pivot shaft 56 so as to be swingable in a horizontal plane. A cam drive shaft 58 extends in a hollow stand 57. A lower end of the cam drive shaft 58 is connected to a drive source, not shown, so as to be reciprocally rotated within a predetermined angular range. A second swinging lever 58 is disposed on an upper end of the cam drive shaft 58 so as to be integrally rotated therewith. An outer end of the second swinging lever 59 is connected to the other end the movement cam 55 through a connection rod 60. The reference numeral 61 depicts a cam support plate. The movement cam 55 is supported slidably along an upper surface of the cam support plate 61. By the rotation of the movement-cam drive shaft 58, the movement cam 55 can take a forward position which is shown by solid lines in Fig. 3, and a rearward position which is shown by two-dot chain lines. At the forward position, an inner circumferential shape serving as a cam surface is an arc whose center is the center of the transport table 24 (center of rotation shaft 24a). On a lower surface of the movement plate 47, a cam-roller attachment shaft part 63 that rotatably supports a cam roller 62 is disposed. The cam roller 62 is constantly pressed onto the inner circumferential side of the movement cam 55 by an action of the compression spring 50.

The joint mechanism 65 comprises a heating plate 66 that is configured to be movable between a sealing position at which the heating plate 66 is in contact with a pouch mouth 212 of a pouch body 210 held by the pouch-body holding mechanism 41, and a retracted position retracted from the pouch mouth 212. A heating mechanism, not shown, is disposed inside the heating plate 66. For example, an electrically heated wire that is powered to generate heat can be used as the heating mechanism. In the temporal sealing step, the heating plate 66 head by the heating mechanism is brought into contact with a pouch mouth 212 of a pouch 210, so that a part of the pouch body 210 in the pouch mouth 212, i.e., a layer (inner layer) positioned inside the pouch body 210 is melted so as to fix (temporally seal) the pouch mouth 212 with respect to the spout 200.

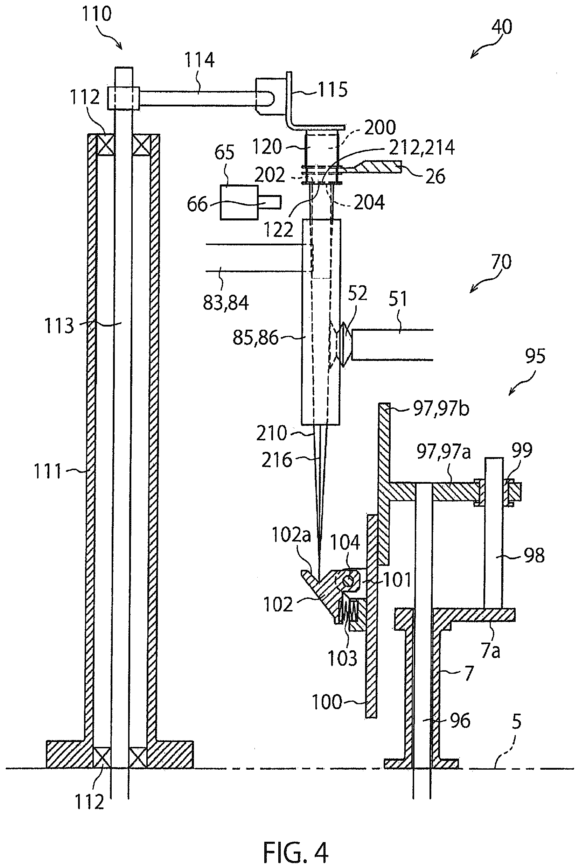

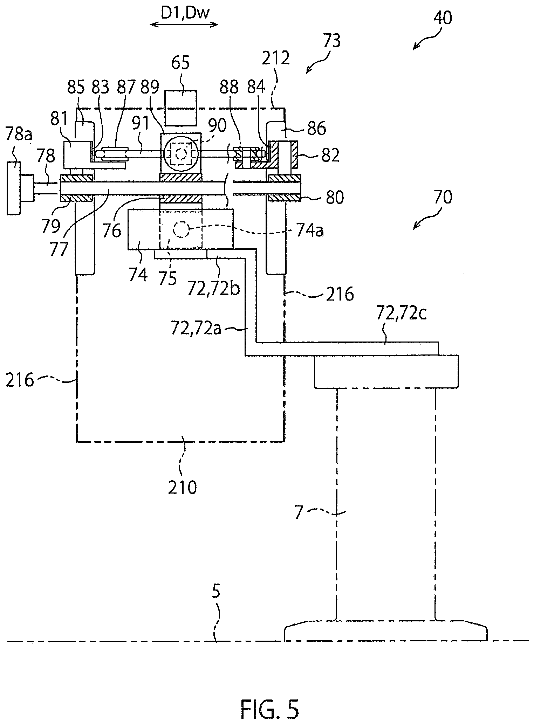

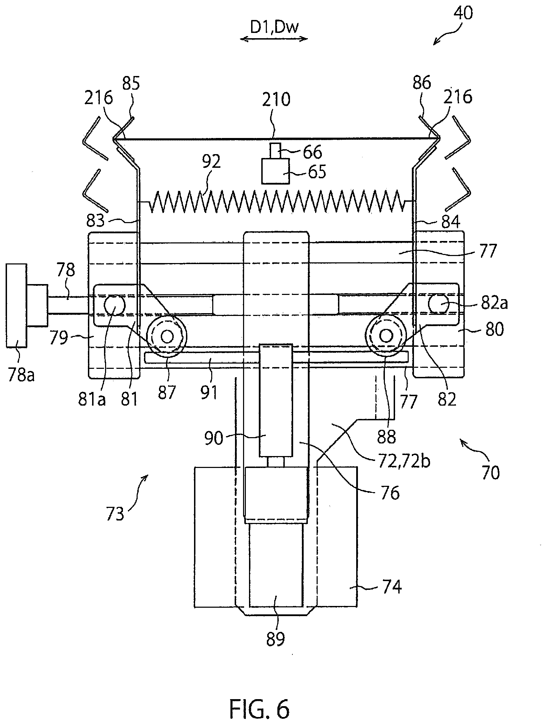

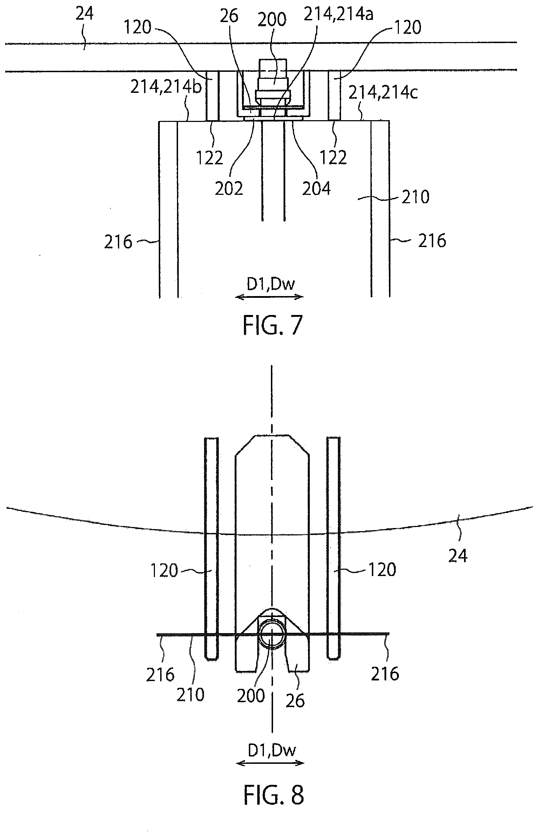

Next, the positioning mechanism 70 of the joint apparatus 40 is described with reference to Figs. 4 to 8. Fig. 4 is a view of the positioning mechanism 70, seen along the transport direction D of a pouch body 210. Fig. 5 is a view of the positioning mechanism 70, seen along a direction perpendicular to a sheet surface of a pouch body 210. Fig. 6 is a view of the positioning mechanism 70, seen from above. Figs. 7 and 8 are views for describing a contact member 120 of the positioning mechanism 70.

The positioning mechanism 70 has a underneath positioning mechanism (pouch-body moving unit) 95 that moves a pouch body 210 toward a spout 200, and a contact member 120 having a contact part 122 that comes into contact with an end 214 of a pouch mouth 212 of the pouch 210. Particularly in this embodiment, the positioning mechanism 70 includes a lateral positioning mechanism 73, the underneath positioning mechanism 95 functioning as a pouch-body moving unit, and a contact mechanism 110. Herebelow, these mechanisms are sequentially described.

The reference numeral 72 depicts a frame of the positioning mechanism 70. The frame 72 comprises a vertical plate part 72a, an upper plate part 72b that horizontally extends from an upper end of the vertical plate part 72a, and an attachment part 72c that extends from a lower end of the vertical plate part 72a oppositely to the upper plate part 72b. The attachment part 72c of the frame 72 is disposed on a stand 7 installed on a base 5.

Herebelow, members constituting the side positioning member 73 are described, with reference numerals 74 to 92 being given to these members. A movement air cylinder 74 is disposed on an upper surface of the upper plate part 72b of the frame 72. A bracket 75 is disposed on a distal end of a rod 74a of the movement air cylinder 74, and a movement block 76 is fixed on the bracket 75. Thus, the bracket 75 and the movement block 76 are moved forward and rearward by an operation of the movement air cylinder 74. Two guide shafts 77 and an adjustment screw shaft 78 that are normal to the movement direction of the movement block 76 are inserted through the movement block 76. Right and left adjustment block 79, 80 are disposed on both ends of the guide shaft 77 so as to be movable along the guide shaft 77. The center part of the adjustment screw shaft 78 is passed through the movement block 76. The adjustment screw shaft 78 can be rotated with respect to the movement block 76, but cannot be axially moved. Both ends thereof are screw-threaded oppositely, and are screw-engaged with internal screws threaded in the right and left adjustment blocks 79, 80. A handle 78a is disposed on one end of the adjustment screw shaft 78. By rotating the handle 78a in one direction, the right and left adjustment blocks 79, 80 come close to each other. By rotating the handle 78a in the other direction, the right and left adjustment blocks 79, 80 move away from each other.

On upper surfaces of the adjustment blocks 79, 80, right and left opening and closing levers 81, 82 are respectively carried by support shaft 81a, 82a so as to be rotatable in a horizontal plane. On inside surfaces of shaft fitting parts of the opening and closing levers 81, 82, right and left positioning-member attachment plates 83, 84 are respectively disposed so as to extend oppositely to the movement air cylinder 74. On distal ends of the positioning-member attachment plates 83, 84, side positioning members 85, 86 each having a V-shaped section are respectively disposed. The side positioning member 85, 86 constitutes a guide unit that guides a side edge part 216.

On distal ends of arm parts of the opening and closing levers 81, 82, which extend to come close to each other, right and left rotation rollers 87, 88 are respectively disposed so as to be rotatable in a horizontal plane. A drive rod 91 extending in the right and left direction, which is held by a rod holding member 90 disposed on a distal end or a rod of an opening and closing air cylinder 89 disposed on the movement block 76, is engaged with a groove formed in a circumferential direction of the rotation roller 87, 88. The reference numeral 92 depicts a tension spring acting on the right and left positioning-member attachment plates 83, 84. Thus, when the opening and closing air cylinder 89 is operated, the positioning-member attachment plates 83, 84 are rotated in directions opposed to each other, so that the side positioning members 85, 86 come close to each other or move away from each other. Thus, the side positioning member 85, 86 functioning as a guide unit can be moved between a guide position at which the side positioning member 85, 86 is in contact with a side edge part 216 of a pouch body 210 so as to guide the side edge part 216, and a retracted position retracted from the guide position.

According to the guide units (side positioning members) 85, 86, since a pouch body 210 can be positioned with respect to a spout 200 with a side edge part 216 of the pouch body 210 being guided, the positioning can be stably performed with a high positioning precision.

Next, members constituting the underneath positioning mechanism (pouch-body moving unit) 95 are described, with reference numerals 96 to 104 being given to these members. The underneath positioning mechanism (pouch-body moving unit) 95 is a mechanism that positions a pouch-body 210 with respect to a spout 200, while supporting a bottom of the pouch body 210. In particular, the underneath positioning mechanism 95 positions a pouch body 210 with respect to a spout 200 along an insertion direction of the spout 200 into the pouch body 210 (in this embodiment, vertical direction). The reference numeral 96 depicts an elevation shaft that is inserted to the stand 7, and is connected to a not-shown drive source, such as an air cylinder. A horizontal part 97a of an elevation bracket 97 is disposed on an upper end of the elevation shaft 96. When the drive source is operated, the elevation shaft 96 and the elevation bracket 97 are moved upward and downward. A guide shaft 98, which is disposed upright on an upper surface of an extension part 7a disposed on an upper end of the stand 7 to extend horizontally, is inserted through a distal end of the horizontal part 97a through a bush 99. The guide shaft 98 prevents rotation of the elevation bracket 97 and guides the same upward and downward.

On a vertical part 97b of the elevation bracket 97, a bottom-positioning-member attachment plate 100 is disposed such that its height is adjustable. In addition, on a support block 101 fixed on the bottom-positioning-member attachment plate 100, a bottom positioning member 102 having a V-shaped depression on an upper part thereof is disposed so as to be rotatable about a horizontal shaft 104. The reference numeral 103 depicts a compression spring disposed between the support block 101 and the bottom positioning member 102. In Fig. 4, the compression spring 103 urges the bottom positioning member 102 in the clockwise direction about the horizontal shaft 104. In a free state, the bottom positioning member 102 is located at a position rotated from the position shown in Fig. 4 slightly in the clockwise direction. Since the bottom positioning member 95 has the compression spring 103, when an end 214 of a pouch mouth 212 of the pouch body 210 comes into contact with a spout 200 or the contact member 120 so that an excessive force acts on the pouch body 210 in a direction in which the pouch body 210 is pressed against the spout 200 or the contact member 120, the compression spring 103 is further compressed to absorb a part of the force. Namely, the compression spring 103 constitutes an absorption mechanism that absorbs, when an end 214 of a pouch mouth 212 of the pouch body 210 comes into contact with a spout 200 or the contact member 120, a part of the force acting on the pouch body 210.

Next, members constituting the contact mechanism 110 are described, with reference numerals 111 to 122 being given to these members. The reference numeral 111 depicts a stand installed on the base 5. An elevation shaft 113 is inserted in the stand 111, and the elevation shaft 113 is supported by the stand 111 through a bearing 112. A lower end of the elevation shaft 113 is connected to a not-shown drive source, such as an air cylinder. An arm unit 114 is disposed on an upper end of the elevation shaft 113. One end of the arm unit 114 is connected to the upper end of the elevation shaft 113, and the other end thereof is connected to an attachment member 115.

The contact member 120 is disposed on a lower surface of the attachment member 115. A lower surface of the contact member 120 constitutes the contact part 122 that comes into contact with an end 214 of a pouch mouth 212 of a pouch body 210. The end 214 of the pouch mouth 212 includes a central part 214a and side parts 214b, 214c along a width direction Dw. In this embodiment, by bringing the central part 214a into contact with a contact surface 204 of a spout 200, the pouch body 210 is positioned with respect to the spout 200. When the pouch body 210 is positioned with respect to the spout 200, the contact part 122 comes into contact with the side parts 214b, 214c in the width direction Dw in the end 214 of the pouch mouth 212. The contact member 120 has a function for preventing deformation of the end 214, and for preventing separation of the end 214 of the pouch mouth 212 from the spout 200 at the central part 214a of the end 214.

In this embodiment, as well shown in Figs. 7 and 8, the contact mechanism 110 has two contact members 120 that are positioned on one side and the other side with respect to the spout holding unit 26. In other words, the contact mechanism 110 has two contact parts 122 that are positioned on one side and the other side with respect to the spout holding unit 26. However, not limited thereto, the number of the contact member(s) 120 (contact part(s) 122) may be only one or three or more. Preferably, the contact members 120 are disposed on one side and the other side of the spout holding unit 26 along the width direction Dw (transport direction D1) of a pouch body 210. In this case, by identically setting a height of the contact part 122 disposed on one side of the spout holding unit 26 and a height of the contact part disposed on the other side of the spout holding unit 26, the height of the side part 214b and the height of the side part 214c can be made uniform when the end 214 of the pouch mouth 212 is in contact with the respective contact parts 122. Thus, it can be prevented that the pouch body 210 which is being inclined is positioned with respect to the spout 200. In the example shown in Figs. 7 and 8, one contact member 120 is disposed on one side of the spout holding unit 26 and one contact member 120 is disposed on the other side of the spout holding unit 26, along the width direction Dw of the pouch 210.

The contact part 122 is disposed to be located at the same height as the contact surface 204 of the spout 200, which is in contact with the pouch body 210, or at a position lower than the contact surface 204. In the illustrated example, a lower surface of a flange part 202 of the spout 200 is used as the contact surface 204. Thus, at least when the pouch body 210 is positioned with respect to the spout 200, the contact part 122 is disposed to be located at the same height as the lower surface of the flange part 202 in the state where the spout 200 is held by the spout holding unit 26, or at a position lower than the contact surface 204. Thus, when the pouch body 210 is positioned with respect to the spout 200, it is possible to further effectively prevent deformation of the end 214 of the pouch mouth 212, and to further effectively prevent separation at the central part 214a of the pouch mouth 212.

When the not-shown drive source is operated, the elevation shaft 113 is moved upward and downward. Thus, the elevation shaft 113, the arm unit 114, the attachment member 115 and the contact member 120 are integrally moved upward and downward. Thus, the contact part 122 can be moved between a contact position at which the contact part 122 is in contact with an end 214 of a pouch mouth 212, and a retracted position retracted from the contact position. For example, when the elevation shaft 113 is in the lowermost position, the contact part 122 of the contact member 120 may be located, as the contact position, at the same height as a contact surface 204 of a spout 200, which is in contact with a pouch body 210, or at a position lower than the contact surface 204. In addition, when the elevation shaft 113 is in the uppermost position, the contact part 122 may be located, as the retracted position, at a height at which the contact member 120 does not interfere with a spout 200 held by the spout holding unit 26.

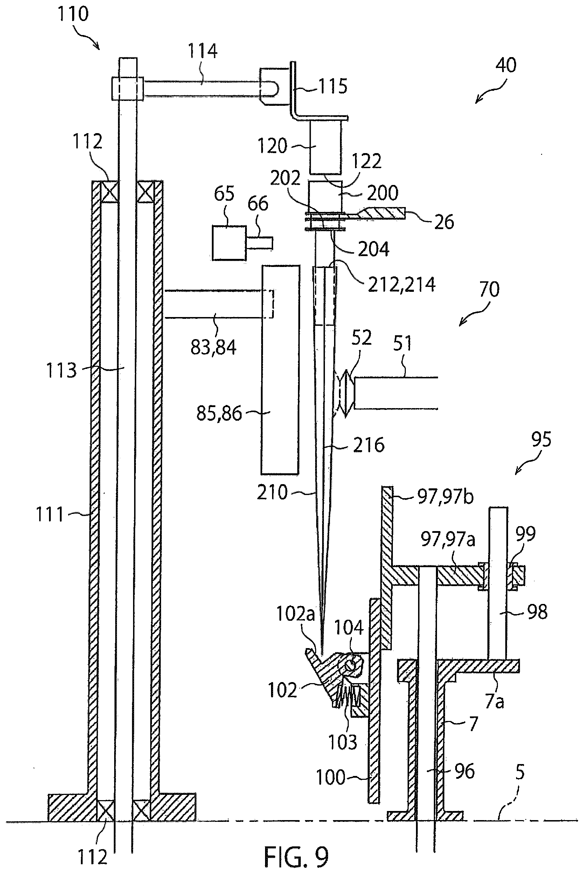

Next, an operation of the joint apparatus 40 is described with reference to Figs. 9 to 14. A joint method using the joint apparatus 40 in this embodiment has a pouch covering step, a contact-member moving step, a pouch-body positioning step, and a joint step. Herebelow, these steps are sequentially described.

### (Pouch covering step)

In the second station S2, a lower cylindrical portion (portion lower than flange part 202) is covered with a pouch body 210 by the pouch covering mechanism. At this time, the movement plate 47 of the pouch-body holding mechanism 41 is positioned in the second station S2. The movement cam 55 is located at the retracted position, so that the movement plate 47 is also located at a retracted position. When the spout 200 is covered with the pouch body 210 by the pouch covering mechanism, the movement-cam drive shaft 58 is rotated at a predetermined angle in a predetermined direction, so that the movement cam 55 is rotated about the pivot shaft 56 so as to move to the forward position. Thus, the movement plate 47 is urged by the compression spring 50 so that the movement plate 47 moves forward. Thus, the sucking disc 52 disposed on the movement plate 47 through the support block 51 sucks the pouch body 210 so as to hold the pouch body 210 (see Fig. 9). Under this state, the transport table 24 is rotated by one step, and the first swinging lever 44 follows the rotation so as to be rotated at the same rotation speed, so that the spout 200 and the pouch body 210 are moved to the succeeding third station S3 so as to be stopped thereat.

### (Contact-member moving step)

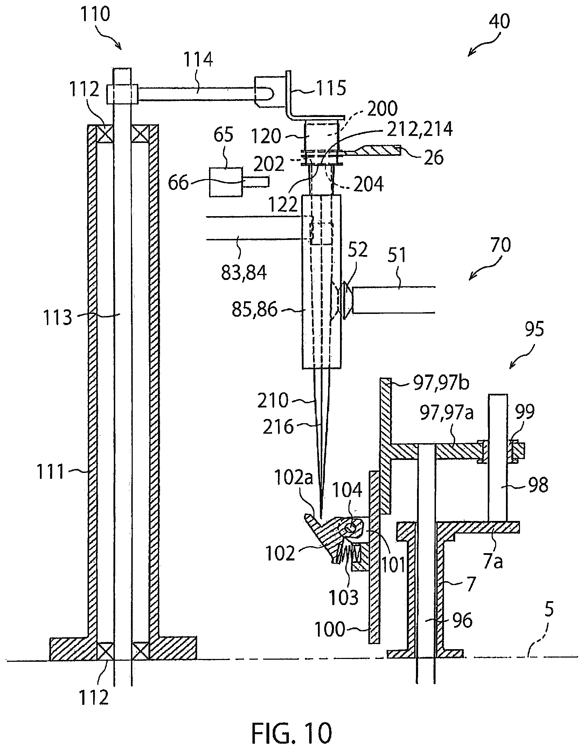

After the transport table 24 has been stopped, the pouch body 210 is positioned with respect to the spout 200 by the positioning mechanism 70. To be specific, the contact part 122 of the contact member 120 is moved form the retracted position to the contact position. Namely, the elevation shaft 113 of the contact mechanism 110 is lowered and the contact member 120 is also lowered in accordance therewith. Thus, the contact part 122 is lowered so as to move to the contact position. Then, the side positioning members 85, 86 of the lateral positioning mechanism 73 of the positioning mechanism 70 are moved forward, while they are away from each other (see Fig. 10).

### (Pouch-body positioning step)

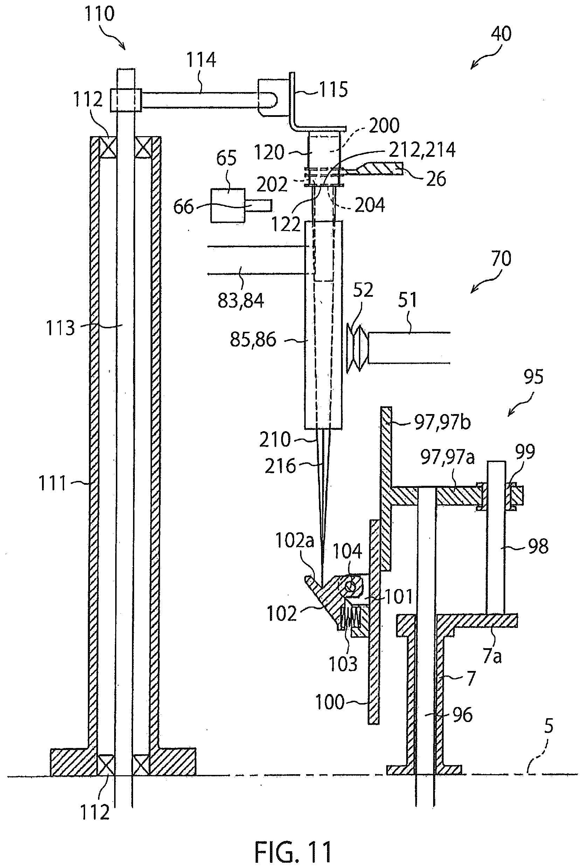

Then, the movement cam 55 is moved to the retracted position so that the sucking disc 52 is retracted. In accordance therewith, the side positioning members 85, 86 come close to each other so as to hold and position the side edge part 216 of the ouch body 210. Simultaneously therewith, the bottom position member 102 of the underneath positioning mechanism 95 moves upward so as to support and position the bottom of the pouch body 210 (see Fig. 11).

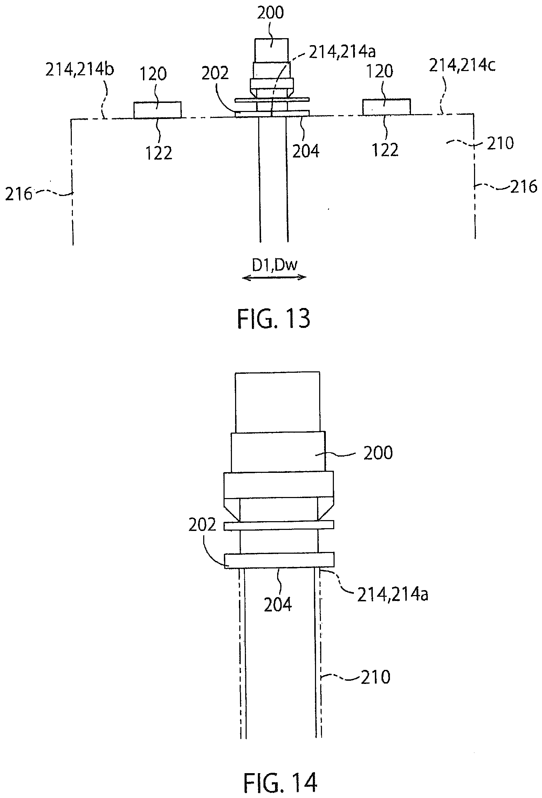

At this time, since the contact part 122 of the contact member 120 is located at the contact position, when the pouch body 210 is positioned with respect to the spout 200, as shown in Fig. 13, the contact parts 122 are in contact with the side parts 214b, 214c of the width direction Dw in the end 214 of the pouch mouth 212, whereby deformation of the end 214 can be prevented. As a result, as shown in Fig. 14, separation of the end 214 of the pouch mouth 212 from the spout 200 at the central part 214a of the end 214 can be prevented.

When the end 214 of the pouch mouth 212 of the pouch body 210 comes into contact with a spout 200 or the contact member 120, there is a possibility that an excessive force acts on the pouch body 210 in a direction in which the pouch body 210 is pressed against the spout 200 or the contact member 120. Since the underneath positioning mechanism 95 in this embodiment has the compression mechanism (absorption mechanism) 103 that absorbs a part of the excessive force acting on the pouch body 210, the compression spring 103 is further compressed so that a part of the force is absorbed.

### (Joint step)

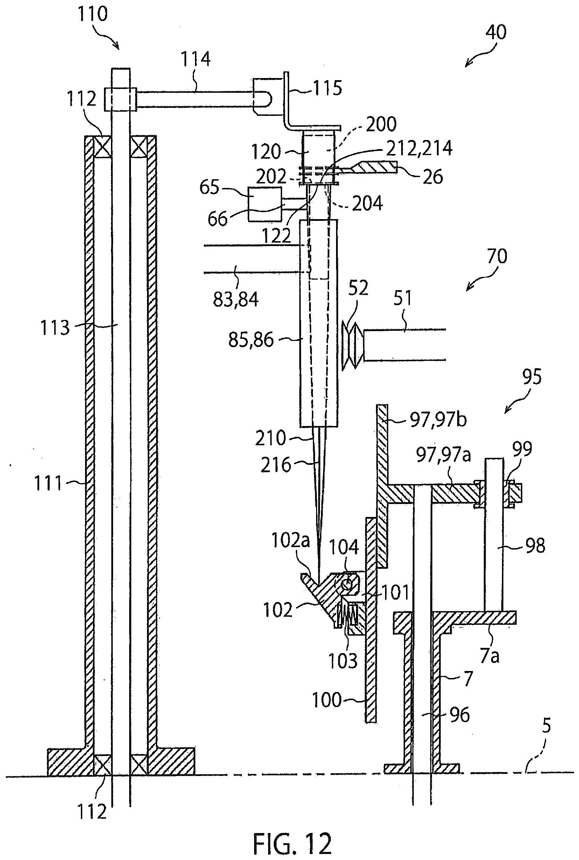

After the pouch body 210 has been positioned with respect to the spout 200, the waiting heating plate 66 of the joint mechanism 65 moves toward the pouch mouth 212 of the pouch body 210, and temporally joins the spout 200 and the pouch body 210 (see Fig. 12). To be specific, the pouch body 210 and the spout 200 are temporally joined to each other by means of the inner layer of the pouch body 210, which is melted by the heating plate 66. Thereafter, the heating plate 66 moves away from the pouch body 210, and the pouch-body holding mechanism 41 and the positioning mechanism 70 move in a predetermined manner to return to the initial positions.

The joint apparatus 40 in this embodiment is the joint apparatus 40 that joins a pouch body 210 to a spout 200, comprising: the spout holding unit 26 that holds the spout 200; the positioning mechanism 70 that positions the pouch body 210 with respect to the spout 200; and the joint mechanism 65 that joins a pouch mouth 212 of the pouch body 210 to the spout 200; wherein the positioning mechanism 70 has the pouch-body moving unit 95 that moves the pouch body 210 toward the spout 200, the contact member 120 having the contact part 122 that comes into contact with an end 214 of the pouch mouth 212, and the absorption mechanism 103 that absorbs a part of a force acting on the pouch body 210 when the end 214 of the pouch mouth 212 comes into contact with the spout 200 or the contact member 120.

According to such a joint apparatus 40, when the pouch body 210 is positioned with respect to the spout 200, since the contact part 122 of the contact member 120 comes into contact with the side part 214b, 214c of the width direction Dw in the end 214 of the pouch mouth 212 (see Fig. 13), it is possible to prevent deformation of the end 214, and to prevent separation of the end 214 of the pouch mouth 212 from the spout 200 at the central part 214a of the pouch mouth 212 (see Fig. 14). Thus, the simple structure of installing the contact member 120 makes it possible to stably align the spout 200 and the pouch body 210. In addition, when the end 214 of the pouch mouth 212 of the pouch body 210 comes into contact with the spout 200 or the contact member 120 so that an excessive force acts on the pouch body 210 in a direction in which the pouch body 210 is pressed against the spout 200 or the contact member 120, the absorption mechanism (compression spring) 103 can absorb a part of the force. Thus, it is possible to prevent that the pouch body 210 is deformed by the excessive force acting on the pouch body 210 so that a positioning precision to the spout 200 is impaired.

In the joint apparatus 40 in this embodiment, the pouch-body moving unit 95 positions the pouch body 210 with respect to the spout 200, while supporting a bottom of the pouch body 210.

According to such a joint apparatus 40, a support apparatus for supporting the bottom of the pouch body 210 can function as a positioning means that moves and positions the pouch body 210. Thus, as compared with a case in which the support apparatus for a pouch body 210 and the positioning means for a pouch body 210 are constructed as separate apparatuses, the structure of the positioning mechanism 70 is simple.

In the joint apparatus 40 in this embodiment, the contact member 120 has at least two contact parts 122 that are positioned on one side and on the other side with respect to the spout holding unit 26.

According to such a joint apparatus 40, when the end 214 of the pouch mouth 212 is in contact with the respective contact parts 122, the height of the side part 214b and the height of the side part 214c can be made uniform. Thus, it can be prevented that the pouch body 210 which is being inclined is positioned with respect to the spout 200.

In the joint apparatus 40 in this embodiment, the contact part 122 is disposed to be located at the same height as the contact surface 204 of the spout 200, which is in contact with the pouch body 210, or at a position lower than the contact surface 204.

In a case where the contact part 122 is located at the same height as the contact surface 204 of the spout 200, which is in contact with the pouch body 210, when the end 214 of the pouch mouth 212 is in contact with the respective contact parts 122, the contact surface 204 of the spout 200 and the central part 214a of the end 214 of the pouch mouth 212 are precisely aligned and in contact with each other. Alternatively, in a case where the contact part 122 is located at a position lower than the contact surface 204 of the spout 200, which is in contact with the pouch body 210, when the end 214 of the pouch mouth 212 is in contact with the respective contact parts 122, the pouch body 210 is positioned with respect to the spout 200 with a small gap being defined between the contact surface 204 of the spout 200 and the central pat 214a of the end 214 of the pouch mouth 212. Thus, separation of the central part 214a of the end 214 of the pouch mouth 212 can be further effectively prevented.

In the joint apparatus 40 in this embodiment, the contact part 122 is movable between the contact position at which the contact part 122 is in contact with the end 214 of the pouch mouth 212, and the retracted position retracted from the contact position.

According to such a joint apparatus 40, when the spout 200 and the pouch body 210 are transported along the transport direction D1, the contact member 120 (contact part 122) can be retracted to a position at which the contact member 120 (contact part 122) does not interfere with transport trajectories of the spout holding unit 26, the spout 200 and the pouch body 210 and the like. Thus, a pair of contact members 120 can perform positioning of all the pouch bodies 210 that are joined to the spouts 200 in the joint apparatus 40. Thus, as compared with a case in which a plurality of pairs of contact members 120 the number of which is the same as the spout holding units 26 are provided for the respective spout holding units 26, installation costs of the contact members 120 can be reduced. In addition, when the position of the contact part 122 at the contact position is desired to be adjusted because types of a spout and/or a pouch body are changed, for example, only one set of contact members 120 is adjusted, which decreases a time required for adjustment.

In the joint apparatus 40 in this embodiment, the positioning mechanism 70 further has a guide unit 85, 86 that guides the side edge part 216 of the pouch body 210, and the guide unit 85, 86 is movable between the guide position at which the guide unit 85, 86 is in contact with the side edge part 216 so as to guide the side edge part 216, and the retracted position retracted from the guide position.

According to such a joint apparatus 40, since a pouch body 210 can be positioned with respect to a spout 200 with a side edge part 216 of the pouch body 210 being guided, the positioning can be stably performed with a high positioning precision.

The spout sealing machine 10 in this embodiment comprises the aforementioned joint apparatus 40, and the sealing apparatus 35, 37 that seals the pouch mouth 212, wherein the joint mechanism 65 is configured to temporally seals the pouch mouth 212 of the pouch body 210 to the spout 200.

According to such a spout sealing machine, after the pouch body 210 has been positioned with respect to the spout 200 and the pouch body 210 has been temporally sealed to the spout 200 by the joint apparatus, the pouch mouth 212 can be sealed (finally sealed) by the seal apparatus 35, 37. Thus, it is not necessary to position the spout 200 and the pouch body 210 in the sealing apparatus 35, 37, and the sealing step can be performed by means of the sealing apparatus 35, 37 of a simple structure.

## Claims

1. A joint apparatus (40) that joins a pouch body (210) to a spout (200), comprising:
a spout holding unit (26) that holds the spout (200);
a positioning mechanism (70) that positions the pouch body (210) with respect to the spout (200); and
a joint mechanism (65) that joins a pouch mouth (212) of the pouch body (210) to the spout (200),
wherein the positioning mechanism (70) has a pouch-body moving unit (95) that moves the pouch body (210) toward the spout (200), a contact member (120) having a contact part (122) that comes into contact with an end (214) of the pouch mouth (212), and an absorption mechanism (103) that absorbs a part of a force acting on the pouch body (210) when the end (214) of the pouch mouth (212) comes into contact with the spout (200) or the contact member (120),
**characterized in that**
the contact part (122) is movable between a contact position at which the contact part (122) is in contact with the end (214) of the pouch mouth (212), and a retracted position retracted from the contact position.

2. The joint apparatus (40) according to claim 1, wherein
the pouch-body moving unit (95) positions the pouch body (210) with respect to the spout (200), while supporting a bottom of the pouch body (210).

3. The joint apparatus (40) according to claim 1 or 2, wherein
the contact member (120) has at least two contact parts (122) that are positioned on one side and on the other side with respect to the spout holding unit (26).

4. The joint apparatus according to any one of claims 1 to 3, wherein
the positioning mechanism (70) further has a guide unit (85, 86) that guides a side edge part (216) of the pouch body (210), and
the guide unit (85, 86) is movable between a guide position at which the guide unit (85, 86) is in contact with the side edge part (216) and guides the side edge part (216), and a retracted position retracted from the guide position.

5. A spout sealing machine (10) comprising the joint apparatus (40) according to any one of claims 1 to 4, and a sealing apparatus (35, 37) that seals the pouch mouth (212), wherein the joint mechanism (65) is configured to temporally seal the pouch mouth (212) of the pouch body (210) to the spout (200).

## Patentansprüche

1. Zusammenfügeeinrichtung (40), die einen Beutelkörper (210) mit einer Tülle (200) zusammenfügt, umfassend:
eine Tüllenhalteeinheit (26), die die Tülle (200) hält;
einen Positioniermechanismus (70), der den Beutelkörper (210) relativ zu der Tülle (200) positioniert; und
einen Zusammenfügemechanismus (65), der eine Beutelmündung (212) des Beutelkörpers (210) mit der Tülle (200) zusammenfügt,
wobei der Positioniermechanismus (70) aufweist: eine Beutelkörperbewegungseinheit (95), die den Beutelkörper (210) hin zu der Tülle (200) bewegt, ein Kontaktelement (120), das einen Kontaktteil (122) aufweist, der mit einem Ende (214) der Beutelmündung (212) in Kontakt kommt, und einen Absorptionsmechanismus (103), der einen Teil einer Kraft absorbiert, die an dem Beutelkörper (210) wirkt, wenn das Ende (214) der Beutelmündung (212) in Kontakt mit der Tülle (200) oder dem Kontaktelement (120) kommt,
**dadurch gekennzeichnet, dass**
der Kontaktteil (122) zwischen einer Kontaktposition, an der der Kontaktteil (122) in Kontakt mit dem Ende (214) der Beutelmündung (212) ist, und einer zurückgezogenen Position, die von der Kontaktposition zurückgezogen ist, beweglich ist.

2. Zusammenfügeeinrichtung (40) nach Anspruch 1, wobei
die Beutelkörperbewegungseinheit (95) den Beutelkörper (210) relativ zu der Tülle (200) positioniert und dabei ein unteres Ende des Beutelkörpers (210) stützt.

3. Zusammenfügeeinrichtung (40) nach Anspruch 1 oder 2, wobei
das Kontaktelement (120) wenigstens zwei Kontaktteile (122) aufweist, die auf der einen Seite und der anderen Seite relativ zu der Tüllenhalteeinheit (26) positioniert sind.

4. Zusammenfügeeinrichtung nach einem der Ansprüche 1 bis 3, wobei
der Positioniermechanismus (70) des Weiteren eine Führungseinheit (85, 86) aufweist, die einen Seitenkantenteil (216) des Beutelkörpers (210) führt, und
die Führungseinheit (85, 86) zwischen einer Führungsposition, an der die Führungseinheit (85, 86) in Kontakt mit dem Seitenkantenteil (216) ist und den Seitenkantenteil (216) führt, und einer zurückgezogenen Position, die von der Führungsposition zurückgezogen ist, beweglich ist.

5. Tüllenverschweißmaschine (10), umfassend die Zusammenfügeeinrichtung (40) nach einem der Ansprüche 1 bis 4 und eine Verschweißeinrichtung (35, 37), die die Beutelmündung (212) verschweißt,
wobei der Zusammenfügemechanismus (65) dafür ausgelegt ist, die Beutelmündung (212) des Beutelkörpers (210) mit der Tülle (200) zeitlich bzw. temporär zu verschweißen.

## Revendications

1. Appareil de raccordement (40) qui raccorde un corps de poche (210) à un bec verseur (200), comprenant :
une unité de maintien de bec verseur (26) qui maintient le bec verseur (200) ;
un mécanisme de positionnement (70) qui positionne le corps de poche (210) par rapport au bec verseur (200) ; et
un mécanisme de raccordement (65) qui raccorde une embouchure de poche (212) du corps de poche (210) au bec verseur (200),
dans lequel le mécanisme de positionnement (70) a une unité de déplacement de corps de poche (95) qui déplace le corps de poche (210) vers le bec verseur (200), un élément de contact (120) ayant une partie de contact (122) qui vient en contact avec une extrémité (214) de l'embouchure de poche (212), et un mécanisme d'absorption (103) qui absorbe une partie d'une force agissant sur le corps de poche (210) lorsque l'extrémité (214) de l'embouchure de poche (212) entre en contact avec le bec verseur (200) ou l'élément de contact (120),
**caractérisé en ce que**
la partie de contact (122) est mobile entre une position de contact dans laquelle la partie de contact (122) est en contact avec l'extrémité (214) de l'embouchure de poche (212), et une position rétractée qui est rétractée depuis la position de contact.

2. Appareil de raccordement (40) selon la revendication 1, dans lequel
l'unité de déplacement de corps de poche (95) positionne le corps de poche (210) par rapport au bec verseur (200), tout en supportant un fond du corps de poche (210).

3. Appareil de raccordement (40) selon la revendication 1 ou 2, dans lequel
l'élément de contact (120) présente au moins deux parties de contact (122) qui sont positionnées d'un côté et de l'autre côté par rapport à l'unité de maintien de bec verseur (26).

4. Appareil de raccordement selon l'une quelconque des revendications 1 à 3, dans lequel
le mécanisme de positionnement (70) a en outre une unité de guidage (85, 86) qui guide une partie de bord latéral (216) du corps de poche (210) et
l'unité de guidage (85, 86) est mobile entre une position de guidage dans laquelle l'unité de guidage (85, 86) est en contact avec la partie de bord latéral (216) et guide la partie de bord latéral (216), et une position rétractée qui est rétractée depuis la position de guidage.

5. Machine de scellement de bec verseur (10) comprenant l'appareil de raccordement (40) selon l'une quelconque des revendications 1 à 4, et un appareil de scellement (35, 37) qui scelle l'embouchure de poche (212),
dans laquelle le mécanisme de raccordement (65) est configuré pour sceller temporairement l'embouchure de poche (212) du corps de poche (210) au bec verseur (200).
